# EUROPÄISCHE PATENTSCHRIFT

(11) **EP 0 816 406 B1**
(45) Veröffentlichungstag und Bekanntmachung des Hinweises auf die Patenterteilung: **06.09.2000**
(21) Anmeldenummer: 97109635.9
(22) Anmeldetag: 13.06.1997
(51) Int. Cl.: C08G 8/18, C08G 8/28, C08G 10/04

(54) **Verfahren zur Herstellung salzarmer Präparationen von Kondensationsprodukten**
Process for preparation of essentially salt free condensation products
Procedure pour la préparation de produits de condensation pauvres en sel

(30) Priorität: 26.06.1996 DE 19625540
(43) Veröffentlichungstag der Anmeldung: 07.01.1998
(73) Patentinhaber: BAYER AG, 51368 Leverkusen (DE)
(72) Erfinder: Tholema, Edzard, Dr., 51519 Odenthal (DE); Zarges, Wolfgang, Dr., 51065 Köln (DE); Träubel, Harro, Dr., 51373 Leverkusen (DE)

(56) Entgegenhaltungen:
- EP-A- 0 037 250
- EP-A- 0 210 378
- EP-A- 0 288 434
- EP-A- 0 474 075
- WO-A-94/26797
- US-A- 4 444 945

## Beschreibung

Die Erfindung betrifft ein Verfahren zur Herstellung salzarmer Präparationen von Kondensationsprodukten aus sulfonierten Aromaten und Aldehyden und/oder Ketonen und gegebenenfalls weiteren Verbindungen wie nicht sulfonierten Aromaten, Harnstoff bzw. Harnstoffderivaten, sowie die Verwendung spezieller salzarmer Präparationen solcher Kondensationsprodukte als Gerbstoffe, Verflüssiger und Dispergiermittel.

Kondensationsprodukte aus sulfonierten Aromaten und Formaldehyd sind bereits bekannt. Diese finden in Form ihrer salzhaltigen Lösungen oder deren Trocknungsprodukte als Gerbstoffe oder als Dispergatoren Verwendung (EP-A 37 250, DE-A-29 34 980). Die bekannten salzhaltigen Präparationen solcher Kondensationsprodukte weisen jedoch noch einige verbesserungsfähige Nachteile auf. So besitzen beispielsweise insbesondere die flüssigen Präparationen noch unzureichende Lagerstabilitäten.

Es wurde nun gefunden, ein Verfahren zur Herstellung salzarmer Präparationen von Kondensationsprodukten auf Basis von
A) sulfonierten Aromaten,
B) Aldehyden und/oder Ketonen und gegebenenfalls
C) einer oder mehreren Verbindungen, ausgewählt aus der Gruppe der nicht sulfonierten Aromaten, Harnstoff und Harnstoffderivaten,
dadurch gekennzeichnet, daß nach der Kondensation vorliegende anorganische Säure vom Kondensationsprodukt gegebenenfalls in Form ihrer Salze nach Neutralisation, ganz oder teilweise abgetrennt wird bis der anorganische Salzgehalt kleiner 10 Gew.-%, bezogen auf die Präparation, beträgt.

Auf Basis von bedeutet, daß das Kondensationsprodukt gegebenenfalls aus weiteren Reaktanden neben A, B und gegebenenfalls C hergestellt wurde.

Als sulfonierte Aromaten werden im Rahmen dieser Anmeldung auch sulfomethylierte Aromaten verstanden. Bevorzugte sulfonierte Aromaten sind: Naphthalinsulfonsäuren, Phenolsulfonsäure, sulfonierte Ditolylether, 4,4'-Dihydroxydiphenylsulfon, sulfoniertes Diphenylmethan, sulfoniertes Diphenyl, sulfoniertes Terphenyl oder Benzol sulfonsäuren.

Als Aldehyde und/oder Ketone kommen insbesondere aliphatische, cycloaliphatische sowie aromatische in Frage. Bevorzugt sind aliphatische Aldehyde, wobei besonders bevorzugt Formaldehyd sowie andere aliphatische Aldehyde mit 3 bis 5 C-Atomen in Frage kommen.

Als nicht sulfonierte Aromaten kommen beispielsweise Phenol, Kresol oder Dihydroxydiphenylmethan in Frage.

Als Harnstoffderivate können beispielsweise Dimethylolharnstoff, Melamin oder Guanidin genannt werden.

Phenol und Phenolderivate wie beispielsweise Phenolsulfonsäure, werden vielfach auch durch gleichzeitiges Einwirken von Formaldehyd und Harnstoff oder durch Dimethylolharnstoff verknüpft (DE-A 1 113 457). Sulfonierungsprodukte aromatischer Verbindungen werden (laut Ullmanns Encyklopädie der technischen Chemie Band 16 (4. Auflage) Weinheim 1979, S. 138) in der Regel, ohne die nicht umgesetzten Ausgangsverbindungen abzutrennen, allein oder gemeinsam mit weiteren Ausgangsverbindungen mit Formaldehyd kondensiert. Eine löslich machende Gruppe kann bei Phenolen auch durch Sulfomethylieren unter gleichzeitiger Einwirkung von Alkalihydrogensulfit und Formaldehyd zusammen mit der Kondensation eingeführt werden. Diese Sulfomethylierung ist z.B. in DE-A 848 823 beschrieben. Die Reaktion nicht umgesetzter Ausgangsprodukte, beispielsweise unsulfonierter Aromaten, mit Formaldehyd zu den fertigen Gerbstoffen kann auch zu ungewünschten Nebenprodukten führen; durch das erfindungsgemäße Verfahren können derartige Ausgangsverbindungen ausgeschleußt und einer neuen Sulfonierung zugesetzt werden.

Auch die gezielte, gemeinsam vorgenommene Kondensation von Ligninsulfonaten mit aromatischen Hydroxylverbindungen (B. Toth, J. Vaida, Das Leder 22 (1971), S. 12 ff.) kann durch das erfindungsgemäße Verfahren im Hinblick auf Salzgehalt und Ausschluß von niedermolekularen Anteilen verbessert werden.

Weitere bevorzugte Kondensationsprodukte sind Kondensate von Ditolylethersulfosäure mit 4,4'-Dihydroxydiphenylsulfon, Phenolsulfonsäure mit Phenol, Formaldehyd und Harnstoff.

Besonders bevorzugte Kondensationsprodukte sind solche, die durch Kondensation von sulfonierten und gegebenenfalls nicht sulfonierten Aromaten mit aliphatischen Aldehyden, vorzugsweise Formaldehyd erhalten werden, wobei unter sulfonierten Aromaten insbesondere keine sulfomethylierten Aromaten verstanden werden.

Solche Kondensationsprodukte werden vorzugsweise durch Kondensation von sulfoniertem Naphthalin und sulfoniertem Phenol (oder 4,4'-Dihydroxydiphenylsulfon) mit Formaldehyd oder aus Naphthalinsulfonsäure und Formaldehyd erhalten.

Das bei der Kondensation bevorzugt erhaltene Kondensationsprodukt besitzt vorzugsweise einen mittleren Kondensationsgrad von 1 bis 150, vorzugsweise von 1 bis 20, insbesondere von 1 bis 5.

Besonders bevorzugt ist das erfindungsgemäße Verfahren, wenn die Kondensationsprodukte aus
A) sulfonierten Aromaten,
B) Formaldehyd und gegebenenfalls
C) nicht sulfonierten Aromaten
hergestellt worden sind.

Die Kondensation läuft im allgemeinen bei pH-Werten von -1 bis 9 ab. In einer besonders bevorzugten Ausführungsform erfolgt die Kondensation von sulfonierten und gegebenenfalls nicht sulfonierten Aromaten, wobei die Aromaten keine Hydroxygruppen tragen, mit Aldehyden und/oder Ketonen, insbesondere einem Aldehyd, vorzugsweise Formaldehyd und gegebenenfalls Harnstoff bzw. Harnstoffderivaten, im sauren pH-Bereich. Die Kondensation von sulfonierten Aromaten, die Hydroxygruppen tragen, mit einem Aldehyd, insbesondere mit Formaldehyd, erfolgt bevorzugt bei pH 6 - 8. Die Kondensationsprodukte liegen vorzugsweise als Alkali-, Erdalkali- oder Ammoniumsalze oder als Gemische davon vor. Besonders bevorzugte Salzformen sind die Na-, K-, Li-, NH₄-, Ca-, Mg- oder NR₁R₂R₃R₄-Salze, wobei

R₁ bis R₄ gleich oder verschiedene C₁-C₈-Alkyl oder C₆-C₁₀-Arylreste oder H bedeuten.

Als abzutrennende anorganische Säure wird vorzugsweise HCl oder H₂SO₄ verstanden. Als ihre Salze werden im Rahmen dieser Anmeldung vorzugsweise anorganische Salze verstanden, wie beispielsweise Alkali-, Erdalkali- und Ammoniumchloride und -sulfate verstanden, wobei unter Ammoniumsalzen NR₁R₂R₃R₄-Salze verstanden werden, wobei R₁ bis R₄ gleich oder verschieden sind und H, C₁-C₈-Alkyl oder C₆-C₁₀-Arylreste bedeuten. Insbesondere werden Na₂SO₄ sowie (NH₄)₂SO₄ oder NaCl darunter verstanden.

Vor oder nach erfolgter Kondensation kann die gegebenenfalls aus der vorangegangenen Sulfonierung des Aromaten stammende und/oder die bei der Kondensationsreaktion verwendete Säure vorzugsweise ganz oder teilweise neutralisiert werden. Nach erfolgter Kondensation wird vorzugsweise ein pH von 3 bis 8 eingestellt. Der pH-Wert wird vorzugsweise so eingestellt, daß eine 1 %ige Lösung den angegebenen pH-Wert besitzt. Dazu wird insbesondere eine anorganische Base wie beispielsweise NaOH, Na₂CO₃, KOH, LiOH, NH₄OH eingesetzt.

Die Sulfonierung der Aromaten zur Herstellung der oben genannten sulfonierten Aromaten erfolgt dabei in der Regel nach allgemein bekannten Verfahren, wie sie beispielsweise in DE-A 29 34 980 beschrieben sind. Als geeignete Sulfonierungsmittel können beispielsweise Chlorsulfonsäure, Amidosulfonsäure, Oleum sowie Schwefelsäure verwendet werden.

Vorzugsweise wird die dabei erhaltene Reaktionsmischung für die nachfolgende Kondensation eingesetzt, ohne daß eine Zwischenisolierung des sulfonierten Aromaten erfolgt. Die Reaktionsmischung wird vorzugsweise eingesetzt, ohne daß die nicht sulfonierten Aromaten abgetrennt werden.

Die nach dem erfindungsgemäßen Verfahren eingesetzten Verfahren zur Abtrennung der anorganischen Säure in Form ihrer Salze, kurz Entsalzungsverfahren, sind beispielsweise solche, die auf dem Ausfrieren von Salzen beruhen, wie sie beispielsweise aus EP-A 15 82 33 bekannt sind. In einer bevorzugten Ausführungsform des erfindungsgemäßen Verfahrens wird die Entsalzung mittels Membrantrennverfahren durchgeführt. Als bevorzugte Membrantrennverfahren kommen dabei die Ultrafiltration, die Diffusionsdialyse oder die Elektrodialyse in Frage.

Die Ultrafiltration, die im allgemeinen als Querstromultrafiltration betrieben wird, und die dabei verwendeten Membranen sind an sich bekannt (siehe beispielsweise Ullmann's Encyclopedia of Industrial Chemistry, Vol. A16, 1990, S. 187-263). Als Membranen werden im allgemeinen handelsübliche Membranen, die beispielsweise aus organischen Materialien wie Polysulfonen oder PVDF (Polyvinylidenfluorid) oder anorganischen Materialien wie TiO₂, ZrO₂ oder Al₂O₃ hergestellt werden in Form von Kapillar-, Rohr- oder Flachmembranen eingesetzt. Flachmembranen werden beispielsweise in Membrankissen oder Spiralwickelmodulaufbauform, wie sie aus Abfallwirtschaftsjournal 2 (1990) 197-221 bekannt sind, eingesetzt. Bei der Entsalzung durch Ultrafiltration im erfindungsgemäßen Verfahren werden im allgemeinen transmembrane Druckdifferenzen von 1 bis 200 bar, vorzugsweise von 1 bis 100 bar angelegt. In einer besonders bevorzugten Ausführungsform beträgt die transmembrane Druckdifferenz 30 bis 100 bar.

Die bei der Entsalzung mittels Diffusionsdialyse verwendeten Membranen sind beispielsweise aus Ullmann's Encyclopedia of Industrial Chemistry, Vol. A15, 1990 und EP 126 830 bekannt. Entsprechendes gilt auch für die dabei einzuhaltenden Verfahrensparameter.

Die bei der Entsalzung mittels Elektrodialyse eingesetzten Elektrodialysemembranen bzw. Elektrodialyseapparaturen sind beispielsweise aus Handbook of Industrial Membrane Technology, 1995, S. 482-510 sowie aus EP-A 167 107 und Abwassertechnik in der Produktion, Bd. 2, Abschnitt 7 bekannt.

Die bei dem Membrantrennverfahren vorzugsweise bei der Ultrafiltration eingesetzten Membranen besitzen in einer bevorzugten Ausführungsform ein molecular-weight-cut-off (MWCO) von 1 000 bis 10 000 Dalton.

Die für die Entsalzung eingesetzten wäßrigen Lösungen bzw. Suspensionen derartiger Kondensationsprodukte besitzen vorzugsweise einen Feststoff-Gehalt von 40 - 70 Gew.-% und einen Salzgehalt von größer 5 Gew.-%, vorzugsweise größer 10 Gew.-%, jeweils bezogen auf die Präparation. Der Gehalt an Kondensationsprodukt, bezogen auf den Feststoffgehalt, beträgt vorzugsweise 70 bis 90 Gew.-%, insbesondere ca. 80 Gew.-%.

Der mit dem jeweils verwendeten Entsalzungsverfahren, vorzugsweise mittels Membrantrennverfahren, einzustellende Salzgehalt beträgt vorzugsweise < 10 Gew.-%, insbesondere < 5 Gew.-%, insbesondere < 2 Gew.-%, ganz besonders bevorzugt < 1 Gew.-%, bezogen auf die Präparation.

Die Herstellung der zu entsalzenden wäßrigen Präparation von Kondensationsprodukten kann auf verschiedene Weise erfolgen. Beispielsweise können entsprechende salzhaltige Präparationen durch Mischen von separat hergestellten Kondensationsprodukten hergestellt werden oder sie werden durch die oben beschriebenen Kondensationsverfahren erhalten.

Vorzugsweise erfolgt die Herstellung von Salzen der anorganischen Säuren enthaltenen, zu entsalzenden Lösungen oder Suspensionen durch Kondensation von sulfonierten Aromaten mit Aldehyden und/oder Ketonen und gegebenenfalls weiteren Verbindungen wie nicht sulfonierten Aromaten, Harnstoff bzw. Harnstoffderivaten.

Wird die aus der Herstellung des sulfonierten Aromaten A) und/oder der Kondensation von A) und B) und gegebenenfalls C) stammende anorganische Säure vom Kondensationsprodukt als solche abgetrennt, so wird vorzugsweise zur Herstellung der sulfonierten Aromaten Schwefelsäure, Chlorsulfonsäure, Amidosulfonsäure und/oder Oleum als Sulfonierungsmittel verwendet, wonach sich ohne Zwischenisolierung, gegebenenfalls zusammen mit nicht sulfonierten Aromaten, Harnstoff und/oder Harnstoffderivaten, die Kondensation mit den Aldehyden und/oder Ketonen, insbesondere aliphatischen Aldehyden anschließt, wobei man gegebenenfalls im Überschuß verwendetes Sulfonierungsmittel und/oder das bei der Sulfonierung gegebenenfalls entstehende anorganische, nicht wässrige, Reaktionsprodukt, also anorganische Säuren, insbesondere HCl oder H₂SO₄ mittels einem Membrantrennverfahren ganz oder teilweise aus dem Reaktionsgemisch der Kondensation entfernt.

Bei dieser erfindungsgemäßen Verfahrensvariante werden bevorzugt die bereits oben beschriebenen sulfonierten Aromaten, nicht sulfonierten Aromaten, Aldehyden sowie Kondensationsprodukte hergestellt bzw. eingesetzt bzw. erhalten. Bei dem überschüssigen Sulfonierungsmittel und/oder dem bei der Sulfonierung gegebenenfalls entstehenden anorganischem nicht wässrigen Reaktionsprodukt handelt es sich vorzugsweise um die anorganische Säure H₂SO₄ und/oder HCl.

Die Abtrennung der anorganischen Säure mit Hilfe eines Membrantrennverfahrens erfolgt vorzugsweise auf dem Wege der Diafiltration mit säurestabilen Ultra- oder Nanofiltrationsmembranen in Querstromfiltrationsweise. Als geeignete Membranen sind dabei beispielsweise Polyhydantoinmembranen zu nennen, wie sie aus EP-A 65 20 44 bekannt sind.

Bevorzugte Membranen für diesen Zweck besitzen ein MWCO-level von 2 000 bis 10 000 Dalton. Gegebenenfalls wird bei diesem Verfahrensschritt gleichzeitig aufkonzentriert.

Gegebenenfalls vorhandene Synthesesalze werden bei diesem Verfahren ebenfalls abgetrennt. Dabei kann die Abtrennung der anorganischen Säure vollständig oder teilweise erfolgen. Sofern nur eine teilweise Abtrennung erfolgt, wird die noch vorhandene Säure vorzugsweise ganz oder teilweise neutralisiert. Dabei wird vorzugsweise ein pH von 3 bis 8 eingestellt. Der pH-Wert wird vorzugsweise so eingestellt, daß eine 1 %ige Lösung den angegebenen pH-Wert besitzt. Zur Neutralisation wird insbesondere eine anorganische Base, wie beipielsweise NaOH, Na₂CO₃, KOH, LiOH, NH₄OH eingesetzt.

Der Salzgehalt der nach diesem erfindungsgemäßen Verfahren hergestellten Präparationen beträgt vorzugsweise < 10 %, insbesondere < 5 %, ganz besonders bevorzugt weniger als 1 Gew.-%, bezogen auf die Präparationen.

Die nach den beiden oben beschriebenen Verfahrensvarianten zur Abtrennung der anorganischen Säure als solche bzw. zur Abtrennung der anorganischen Säure in Form ihres Salzes hergestellten flüssigen salzarmen Präparationen werden im folgenden, um Verwechselungen zu vermeiden, als "entsalzte" bzw. als "von Salzbildnern befreite" Lösungen bzw. Suspensionen bezeichnet. Salzbildner im zuletzt beschriebenen Verfahren sind beispielsweise HCl oder H₂SO₄, wobei der Begriff "befreit" ganz oder teilweise befreit bedeutet.

Die "entsalzten" Lösungen bzw. Suspensionen, d.h. die nach dem oben beschriebenen Entsalzungsverfahren erhaltenen Lösungen bzw. Suspensionen, sowie die "von Salzbildnern befreiten" Präparationen, d.h. die im Anschluß an die Kondensationsreaktion nach dem ebenfalls oben beschriebenen Verfahren von Sulfonierungsmitteln bzw anorganischen Sulfonierungsprodukten membrantechnisch befreiten Lösungen bzw. Suspensionen, können beispielsweise noch aufkonzentriert, membrantechnisch speziell behandelt und/oder gegebenenfalls getrocknet werden.

Die Aufkonzentration dieser Präparationen kann beispielsweise mittels Ultra-, Nanofiltration oder Reverse Osmose erfolgen.

Dabei werden die dafür üblichen Membranen verwendet sowie die dafür üblichen Verfahrensbedingungen eingehalten. Bei Verwendung der Ultrafiltration zur Entsalzung kann die Entsalzung auf dem Wege der Diafiltration erfolgen. Für den Fall, daß eine Aufkonzentration gewünscht wird, kann die Entsalzung unter gleichzeitiger Aufkonzentration durchgeführt werden.

In einer bevorzugten Ausführungsform werden die zu entsalzenden wäßrigen Lösungen oder Suspensionen obiger Kondensationsprodukte vor ihrer erfindungsgemäßen Entsalzung oder die nach den erfindungsgemäßen Verfahren entsalzten bzw. "von Salzbildnern befreiten" Lösungen bzw. Suspensionen gegebenenfalls nach ihrer jeweiligen Aufkonzentration durch eine Membran mit einem MWCO von >80 000 Dalton, vorzugsweise von 200 000 bis 500 000 Dalton permeiert.

Die nach den erfindungsgemäßen Verfahren "entsalzten" bzw. "von Salzbildnern befreiten" gegebenenfalls aufkonzentrierten sowie gegebenenfalls durch Membranen mit einem MWCO-level von >80 000 Dalton permeierten Lösungen bzw. Suspensionen obiger Kondensationsprodukte werden in einer weiteren bevorzugten Ausführungsform getrocknet. Vor der Trocknung können der wäßrigen Präparation selbstverständlich noch für Gerbstoffe, Verflüssiger oder Dispergiermittel übliche Zusätze zugegeben werden, wobei durch deren Zugabe der Salzgehalt unter 10 Gew.-%, vorzugsweise unterhalb von 5 Gew.-%, insbesondere <1 Gew.-%, bezogen auf die Präparation, bleibt.

Als geeignete Trocknungsverfahren kommen beispielsweise die in Chem. Ing. Tech. 66 (1994) 1 610 sowie die in Chem. Ing. Tech. 67 (1995) 401 beschriebenen Verfahren in Frage. Besonders bevorzugt ist die Sprühtrocknung. Die bei der Trocknung gebildete feste Präparation, liegt beispielsweise als Pulver oder Granulat vor. Sie besitzt einen Salzgehalt von <10 Gew.-%, vorzugsweise <5 Gew.-%, insbesondere <1 Gew.-%, bezogen auf die Präparation. Der Gehalt an Kondensationsprodukt in der festen Präparation liegt vorzugsweise bei 85 bis 98 Gew.-%, bezogen auf die Präparation.

Die nach den erfindungsgemäßen Verfahren erhaltenen "entsalzten" bzw. "von Salzbildnern befreiten" Präparationen sind in Form ihrer wäßrigen Suspension oder Lösung, vorzugsweise in Form ihrer konzentrierten Lösung, sehr lagerstabil. Die entsprechenden festen Präparationen zeichnen sich neben einer guten Lagerstabilität gegebenenfalls zusätzlich durch Staubarmut, Abriebfestigkeit sowie guter Granulatstabilität aus.

Es wurde gefunden, daß die nach den erfindungsgemäßen Verfahren erhaltenen wässrigen sowie festen Präparationen sich hervorragend als Gerbstoffe, Dispergiermittel oder Verflüssiger (s. bspw. DE-A 2 934 980) eignen, wobei unter Gerbstoffen auch Hilfsgerbstoffe sowie Nachgerbstoffe verstanden werden. Die Erfindung betrifft daher auch die entsprechende Verwendung dieser Präparationen. Für die angegebenen Verwendungen besitzen diese wäßrigen sowie festen Präparationen eine erhöhte Wirksamkeit gegenüber den nicht nach den erfindungsgemäßen Verfahren hergestellten Präparationen. Die anwendungstechnischen Eigenschaften dieser salzarmen Präparationen sind ebenfalls verbessert. Als solche können beispielsweise die verbesserte Fülle des damit gegerbten Leders sowie der bei der Nachgerbung von Leder verbesserte Griff genannt werden.

Besonders geeignet für die genannten Verwendungen sind beispielsweise Präparationen enthaltend ein Kondensationsprodukt auf Basis von
A) sulfonierten Aromaten,
B) Aldehyden und/oder Ketonen und gegebenenfalls
C) einer oder mehrere Verbindungen, ausgewählt aus der Gruppe der nicht sulfonierten Aromaten, Harnstoff und Harnstoffderivaten,
wobei das Kondensationsprodukt ein mittleren Kondensationsgrad von kleiner gleich 5, vorzugsweise von 1 bis 5 besitzt, und der anorganische Salzgehalt der Präparation <10 Gew.-%, bezogen auf die Präparation beträgt. Besonders bevorzugt ist das Kondensationsprodukt aus sulfonierten Aromaten und einem aliphatischen Aldehyd, insbesondere Formaldehyd, und gegebenenfalls nicht sulfonierten Aromaten. Bevorzugt liegen diese Präparationen in wäßriger Form mit einem bevorzugten Salzgehalt von <5 Gew.-%, insbesondere <1 Gew.-%, bezogen auf die Präparation, vor. Diese enthalten in einer bevorzugten Ausführungsform die Kondensationsprodukte in einer Menge von 10 bis 60 Gew.-%, insbesondere in einer Menge von 30 bis 60 Gew.-%, bezogen auf die Präparation. Weiterhin können diese wäßrigen Präparationen weitere Zusätze enthalten, beispielsweise
- 0 bis 10 Gew.-%: aromatische und/oder aliphatische Mono- und/oder Polycarbonsäure, wie beispielsweise Glutarsäure,
- 0 bis 3 Gew.-%: Komplexierungsmittel für Eisen wie EDTA.

Ebenfalls bevorzugt sind diese erfindungsgemäßen Präparationen in ihrer festen Form. Vorzugsweise ist deren Salzgehalt <10 Gew.-%, insbesondere <5 Gew.-%, ganz besonders bevorzugt <1 Gew.-%, bezogen auf die Präparation. Ihr Gehalt an besagtem Kondensationsprodukt beträgt vorzugsweise 90 bis 98 %. Auch die festen Präparationen können die oben genannten weiteren Zusätze enthalten. Deren Mengen ergeben sich im allgemeinen aus den bevorzugten Mengen weiterer Zusätze für die flüssigen Präparationen nach der Trocknung.

Diese erfindungsgemäß verwendeten Präparationen können hergestellt werden beispielsweise nach einem der erfindungsgemäßen Verfahren. Besonders bevorzugt werden diese Präparationen, enthaltend obiges Kondensationsprodukt mit einem mittleren Kondensationsgrad von kleiner gleicher 5, insbesondere von 1 bis 5 als Gerbstoffe, und als Dispergatoren, eingesetzt.

Die nach dem crfindungsgemäßen Verfahren mit den oben beschriebenen Membrantrennverfahren entsalzten Lösungen bzw. Suspensionen sowie die nach dem erfindungsgemäßen Verfahren erhaltenen "von Salzbildnern befreiten" Lösungen bzw. Suspensionen, bei dem nach der Kondensation die Salzbildner membrantechnisch ganz oder teilweise entfernt werden, sind vorzugsweise restmonomerenarm bis restmonomerenfrei. Unter "Monomerenarm" wird ein Restmonomerengehalt von weniger als 30 Gew.-%, vorzugsweise weniger als 20 Gew.-%, bezogen auf das Kondensationsprodukt, insbesondere < 10 Gew.-%, vorzugsweise < 5 Gew.-%, verstanden. Unter Restmonomeren werden in diesem Zusammenhang, die zur Herstellung des Kondensationsproduktes eingesetzten Reaktanden verstanden. Die bei den erfindungsgemäßen Verfahren abgetrennten Monomeren können in einer entsprechenden Kondensationsreaktion wieder eingesetzt werden. Bevorzugt ist für diesen Zweck das Eluat zu verwenden, das aus dem erfindungsgenäßen Verfahren, bei dem die Salzbildner membrantechnisch entfernt werden, stammt, da die Salzlast geringer ist.

Ebenfalls bevorzugt geeignet für die genannten Verwendungen sind Präparationen, enthaltend ein Kondensationsprodukt auf Basis von
A) sulfonierten Aromaten,
B) Aldehyden und/oder Ketonen und gegebenenfalls
C) einer oder mehreren Verbindungen ausgewählt aus der Gruppe der nicht sulfonierten Aromaten, Harnstoff und Harnstoffderivaten,
wobei der Restmonomerengehalt weniger als 30 %, vorzugsweise weniger als 20 Gew.-%, bezogen auf das Kondensationsprodukt, insbesondere < 10 Gew.-% beträgt und der anorganische Salzgehalt < 10 Gew.-%, vorzugsweise < 5, insbesondere < 1 Gew.-%, bezogen auf die Präparation, beträgt.

Bevorzugter Restmonomerengehalt beträgt weniger als 30 Gew.-%, vorzugsweise weniger als 20 Gew.-%, besonders bevorzugt weniger als 10 Gew.-%, insbesondere weniger als 5 Gew.-%, bezogen auf das Kondensationsprodukt. Bevorzugter anorganischer Salzgehalt beträgt < 5 Gew.-%, insbesondere < 1 Gew.-%, bezogen auf die Präparation.

Die Salz- und Restmonomeren-armen Präparationen können ebenfalls nach dem erfindungsgemäßen Verfahren hergestellt werden.

Besonders bevorzugt liegen diese Präparationen in wäßriger Form mit einem bevorzugten Salzgehalt von < 5 Gew.-%, insbesonders < 1 Gew.-%, bezogen auf die Präparationen, vor. Diese enthalten in einer weiteren bevorzugten Ausführungsform die Kondensationsprodukte in einer Menge von 10 - 60 Gew.-%, insbesondere in einer Menge von 30 - 60 Gew.-%, bezogen auf die Präparation.

Ebenfalls besonders bevorzugt ist die Verwendung dieser salz- und restmonomerarmen Präparationen, in denen das Kondensationsprodukt einen mittleren Kondensationsgrad von 1 - 20, vorzugsweise 1 - 10, insbesondere 1 bis 5 besitzt. Die bevorzugten Kondensationsprodukte sind bereits oben genannt.

Die erfindungsgemäß zu verwendenden Präparationen enthaltend ein Kondensationsprodukt sind in einer weiteren bevorzugten Ausführungsform dadurch erhältlich, daß man eine wäßrige Lösung oder Suspension eines Kondensationsprodukts auf Basis von
A) sulfonierten Aromaten,
B) Aldehyden und/oder Ketonen und gegebenenfalls
C) einer oder mehreren Verbindungen ausgewählt aus der Gruppe der nicht sulfonierten Aromaten, Harnstoff und Harnstoffderivaten,
über eine Ultrafiltrationsmembran permeiert, die ein MWCO-level von > 80.000 Dalton, insbesondere von 200.000 bis 500.000 Dalton besitzt.

Dabei kann eine Entsalzung vor oder nach dieser Membranbehandlung erfolgen; muß aber nicht. Derartig erhältliche Präparationen besitzen den Vorteil bereits in geringen Mengen angewendet, besonders gute Wirkungen zu besitzen. Darüber hinaus besitzen sie anwendungstechnische Vorteile.

Diese erfindungsgemäß zu verwendenden Präparationen können als wäßrige Präparation gegebenenfalls nach Zugabe weiterer Zusätze, wie sie beispielsweise oben beschrieben sind, oder durch Trocknung, gegebenenfalls nach Zugabe weiterer Zusätze, als feste Präparation verwendet werden.

Die bevorzugten Salz-, Feststoff- sowie Kondensationsproduktgehalte der oben beschriebenen erfindungsgemäß zu verwendenden Präparationen entsprechen denen, die für das erfindungsgemäße Verfahren genannt sind. Auch sind solche Präparationen besonders bevorzugt, deren Kondensationsprodukte die oben genannten Molekulargewichte sowie Kondensationsgrade besitzen. Die erfindungsgemäß zu verwendenden Präparationen können beispielsweise nach dem erfindungsgemäßen Verfahren hergestellt werden.

Als Gerbstoffe werden besonders bevorzugt die Präparationen bzw. die nach den erfindungsgemäßen Verfahren hergestellten Präparationen von Kondensationsprodukten mit einem mittleren Kondensationsgrad von kleiner gleich 5, insbesondere von 1 bis 5.

Als Dispergiermittel werden besonders bevorzugt die Präparationen bzw. die nach den erfindungsgemäßen Verfahren hergestellten Präparationen von Kondensationsprodukten mit einem mittleren Kondensationsgrad von 3 bis 10, verwendet. Besonders bevorzugt werden als Dispergiermittel solche verwendet, die als Kondensationsprodukte aus hydroxygruppenfreien sulfonierten Aromaten und Aldehyden, insbesondere Formaldehyd, erhalten wurden.

Als Verflüssiger werden besonders bevorzugt die Präparationen bzw. die nach dem erfindungsgemäßen Verfahren hergestellten Präparationen von Kondensationsprodukten mit einem mittleren Kondensationsgrad von 1 bis 5 verwendet.

Die Verwendung der oben beschriebenen bzw. erfindungsgemäß erhaltenen Präparationen als Dispergatoren ist vorzugsweise dadurch gekennzeichnet, daß man zu einer wäßrigen Suspension eines Feststoffes, insbesondere eines Pigments, vorzugsweise organischen Pigment, und/oder Farbstoffes die erfindungsgemäße bzw. erfindungsgemäß erhaltene Präparation zugibt und die Suspension gegebenenfalls homogenisiert, beispielsweise in einem Naßzerkleinerungsaggregat wie einer Perlmühle.

Dabei werden lagerstabile Dispersionen erhalten, die gegebenenfalls sprühgetrocknet werden.

Die Verwendung der erfindungsgemäßen bzw. erfindungsgemäß erhaltenen Präparationen als Verflüssiger, insbesondere als Betonverflüssiger ist vorzugsweise dadurch gekennzeichnet, daß man zu einer zu verflüssigenden Suspension die erfindungsgemäße bzw. erfindungsgemäß erhaltene Präparation, vorzugsweise in einer Menge von 0,1 bis 1,0 Gew.-%, bezogen auf die zu verflüssigende Suspension, zugibt. Die Verwendung der erfindungsgemäßen bzw. erfindungsgemäß erhaltenen Präparationen als Gerbstoffe ist vorzugsweise dadurch gekennzeichnet, daß man ein gegerbtes Leder, beispielsweise chromgegerbtes Leder (wet blue), in Gegenwart der erfindungsgemäßen bzw. erfindungsgemäß erhaltenen Präparation neutralisiert, nachgerbt, färbt und/oder fettet. Üblicherweise werden diese Verfahrensschritte alle unter dem Begriff "Nachgerbung" zusammengefaßt.

### Beispiel 1

25 kg einer Lösung, hergestellt durch Mischen einer Lösung, hergestellt aus 23 Teilen (Masse) Naphthalin und 18 Teilen Phenol durch Sulfonierung und anschließende Kondensation mit Formaldehyd, und einer Lösung, hergestellt aus Naphthalin durch Sulfonierung und anschließende Kondensation mit Formaldehyd, werden nach Abstumpfung des pH-Wertes auf 3 bis 7 mit Natronlauge bei einem Transmembrandruck von 35 bar und einer Temperatur von 30°C einer Querstromfiltration unterzogen. Eingesetzt wird dabei eine Tubularmembran mit einem MWCO von 9 000 g/mol. Durch vierfache Diafiltration (kontinuierlicher Austausch von Permeat gegen vollentsalztes Wasser) wird der Sulfatgehalt von 6.0 % auf < 0,2 % gesenkt. Der Restmonomerengehalt, bezogen auf die Gesamtmenge des Kondensationsproduktes, nimmt dabei von 22 % auf 9 Gew.-% ab. Der mittlere Kondensationsgrad betrug kleiner gleich 5. Bei der abschließenden Aufkonzentrierung wird der Wirkstoffgehalt um 45 % erhöht. Der Sulfatgehalt ändert sich dabei nicht mehr. Als Gerbstoff verwendet, ergibt die Präparation in Allein- und Nachgerbung ein Leder mit verbesserter Fülle.

### Beispiel 2

10 kg einer Lösung, hergestellt aus Naphthalin durch Sulfonierung und anschließende Kondensation mit Formaldehyd, mit einem osmotischen Druck von 75 bar werden nach Abstumpfung des pH-Wertes auf 3 bis 7 mit Ammoniakwasser bei einem Transmembrandruck von 35 bar und einer Temperatur von 25°C einer Querstromfiltration unterzogen. Eingesetzt wird dabei eine Tubularmembran mit einem MWCO von 2 000 g/mol. Durch dreifache Diafiltration (diskontinuierlich) wird der Sulfatgehalt von 6,9 % auf < 0,2 % gesenkt. Der Restmonomerengehalt (1- und 2-Naphthalinsulfonsäure), bezogen auf die Gesamtmenge des Kondensationsproduktes, nimmt dabei von 25 auf 13 Gew.-% ab. Der mittlere Kondensationsgrad betrug kleiner gleich 5. Der Wirkstoffgehalt ändert sich dabei nicht. In der Nachgerbung von Leder eingesetzt, ergibt die Präparation ein in Griff und Fülle verbessertes Produkt.

### Beispiel 3

100 kg einer Suspension, hergestellt durch Sulfonierung von Ditolylether und anschließende Kondensation mit Formaldehyd, werden nach Abstumpfung des pH-Wertes auf 3 bis 7 mit Natronlauge durch Erwärmen auf 40°C in Lösung gebracht. Bei einem Transmembrandruck von 40 bar und einer Temperatur von 40°C wird diese Lösung einer Querstromfiltration unterzogen. Eingesetzt werden dabei Flachmembranen in Spiralwickelmodulbauform mit einem MWCO von 3500 g/mol. Durch eine kontinuierliche Diafiltration wird der Sulfatgehalt von 6,0 auf 1,2 % gesenkt. Bei der anschließenden Aufkonzentration wird der Wirkstoffgehalt um 50 % erhöht. Dabei sinkt der Sulfatgehalt weiter auf 0,6 % ab. Der Restmonomerengehalt, bezogen auf die Gesamtmenge an Kondensationsprodukt verringert sich dabei von 15 auf 10 Gew.-%. Der mittlere Kondensationsgrad liegt bei kleiner gleich 5. Die so erhaltene Lösung ist in der hohen Wirkstoffkonzentration lagerstabil und eignet sich als Additiv bei Flüssigformulierungen, ohne deren Lagerstabilität negativ zu beeinflussen. Als Dispergiermittel eingesetzt, ist die Wirkung der Präparation gegenüber der Ausgangsware deutlich verbessert. Die Präparation kann bei der Formulierung von Pigmenttinten eingesetzt werden.

### Beispiel 4

13 kg einer Lösung, hergestellt aus 18 Teilen Phenol und 31 Teilen Ditolylether durch Sulfonierung und anschließende Kondensation mit Formaldehyd, werden nach Abstumpfung des pH-Wertes auf 3 bis 7 mit Natronlauge bei einem Transmembrandruck von 40 bar und einer Temperatur von 55°C einer Querstromfiltration unterzogen. Eingesetzt werden dabei Flachmembranen mit einem MWCO von 8000 g/mol in einem Plattenmodul. Durch eine dreimalige kontinuierliche Diafiltration wird der Sulfatgehalt von 5,0 % auf < 0,2 % abgesenkt. Bei der anschließenden Aufkonzentrierung wird der Wirkstoffgehalt um 60 % erhöht. Der Restmonomerengehalt (4,4'-Dihydroxydiphenylsulfon), bezogen auf die Gesamtmenge an Kondensationsprodukt, nimmt dabei von 15 auf 8 Gew.-% ab. Das Kondensationsprodukt besitzt einen mittleren Kondensationsgrad von kleiner gleich 5. Die erhaltene Präparation ist auch sehr lagerstabil trotz 50 % mehr Wirkstoff und ergibt, als Gerbstoff eingesetzt, ein Leder mit verbesserten Eigenschaften als bei Einsatz der salzhaltigen Ausgangsware.

### Beispiel 5

15 kg einer Lösung, hergestellt aus gleichen Anteilen Naphthalin und Phenol durch Sulfonierung und anschließende Kondensation mit Formaldehyd, werden nach Abstumpfung des pH-Wertes auf 3 bis 7 mit Ammoniakwasser bei einem Transmembrandruck von 55 bar und einer Temperatur von 55°C einer Querstromfiltration unterzogen. Eingesetzt werden dabei Flachmembranen mit einem MWCO von 2500 g/mol in einem Membrantaschenmodul. Durch dreimalige kontinuierliche Diafiltration wird der Sulfatgehalt von 4,5 % auf 0,3 % abgesenkt. Der Restmonomerengehalt (nicht kondensierte Phenolsulfonsäuren, Naphthalinsulfonsäuren und 4,4'-Dihydroxydiphenylsulfon), bezogen auf die Gesamtmenge an Kondensationsprodukt, nimmt dabei von 43 auf 28 Gew.-% ab. Die Präparation ergibt, als Gerbstoff eingesetzt, ein Leder mit verbesserten Eigenschaften als bei Einsatz der salzhaltigen Ausgangsware.

### Beispiel 6

15 kg einer Lösung, hergestellt aus gleichen Anteilen Naphthalin und Phenol durch Sulfonierung und anschließende Kondensation mit Formaldehyd, werden nach Abstumpfung des pH-Wertes auf 3 bis 7 mit Ammoniakwasser bei einem Transmembrandruck von 10 bar und einer Temperatur von 55°C einer Querstromfiltration unterzogen. Eingesetzt werden dabei Tubularmembranen mit einem MWCO von 200 000 g/mol. Durch den Membranprozess wurden höher kondensierte Bestandteile abgetrennt, so daß das Permeat ausschließlich aus Verbindungen mit einem mittleren Kondensationsgrad von kleiner gleich 3 besteht. Das Permeat ergibt, als Gerbstoff eingesetzt, ein Leder mit verbesserten Eigenschaften als bei Einsatz der nicht behandelten Ausgangsware. Das Permeat wurde dann noch entsalzt, wodurch eine konzentrierte, lagerstabile Flüssigformulierung erhalten wurde.

### Beispiel 7

2 kg einer Lösung, hergestellt aus 18 Teilen Phenol und 31 Teilen Ditolylether durch Sulfonierung und anschließende Kondensation mit Formaldehyd, werden nach Abstumpfung des pH-Wertes auf 3 bis 7 mit Natronlauge bei einer Temperatur von 40°C einer Elektrodialyse unterworfen. Nach 55 h war der Sulfatgehalt von 5,0 % auf 1,0 % gesunken. Das Kondensationsprodukt besitzt einen mittleren Kondensationsgrad von kleiner gleich 5. Das Diluat besitzt gegenüber der salzhaltigen Ausgangsware auch bei hohen Wirkstoffkonzentrationen eine gute Lagerstabilität und ergibt, als Gerbstoff eingesetzt, ein Leder mit verbesserten Eigenschaften.

### Beispiel 8

50 kg einer Lösung, hergestellt aus gleichen Anteilen Naphthalin und Phenol durch Sulfonierung und anschließende Kondensation mit Formaldehyd, wurde direkt nach der Kondensation, d.h. ohne Zugabe von Lauge, bei 50°C und 30 bar Moduleingangsdruck einer Querstromfiltration unterzogen. Eingesetzt wurden dabei säureresistente Membranen aus cyclischen Polyharnstoffen, wie sie beispielsweise aus EP-A-652 044 bekannt sind, in Form einer Flachmembran in Spiralwickelbauform mit einem MWCO von ca. 2 000 g/mol*. Durch den einmaligen Austausch der Gesamtmenge gegen vollentsalztes Wasser wurde der Schwefelsäuregehalt um etwa 85 % abgesenkt, so daß nach der pH-Abstumpfung eine Formulierung erhalten wurde, die etwa 85 % weniger Neutralisations-Salz enthielt als eine Standardware, die aus obiger Ausgangsware direkt durch Laugenzugabe herstellbar ist. Der Restmonomerengehalt, bezogen auf die Gesamtmenge an Kondensationsprodukt, nahm bei der membrantechnischen Entsalzung von 29 auf 22 Gew.-% ab. Als Gerbstoff eingesetzt, wurden mit nur 90 % der Menge die gleichen anwendungstechnischen Ergebnisse erzielt wie mit einer Ware, die durch Zugabe von Lauge direkt aus der Ausgangsware erhalten wurde.

### Anwendungsbeispiele

### Verfahren zum Gerben von Leder

Ein chromgegerbtes Leder (wet blue) wird in wäßriger Flotte zunächst mit ca. 3 % einer erfindungsgemäß erhaltenen Präparation, die die Eigenschaft eines Neutralisationsgerbstoffes besitzt, dann mit ca. 4 % eines fetten Öls behandelt (1,5 h, 40°C). Nach Austausch der Flotte und Waschen mit Wasser läßt man dann ca. 5 % einer erfindungsgemäßen Präparation, oder eine Kombination mehrerer erfindungsgemäß erhaltener Präparationen, die die Eigenschaften von Austauschgerbstoffen besitzen, evtl. zusammen mit einem Lederfarbstoff bei ca. 40 bis 60°C für etwa 1 h einwirken. Es schließt sich eine Säurebehandlung und nach Ablassen der Flotte und Waschen des Leders eine Behandlung mit Fetten und/oder weichmachenden Stabilisierungsmitteln an.

### Verfahren zum Dispergieren von organischen Pigmenten

Eine Suspension des organischen Pigments mit etwa 20 % Pigmentanteil wird mit etwa 5 % einer erfindungsgemäßen Präparation vermischt und die Suspension anschließend zweimal in einer Perlmühle gemahlen. Man erhält eine lagerstabile Dispersion, die gegebenenfalls auch sprühgetrocknet werden kann.

### Verfahren zum Dispergieren/Stabilisieren von Lederfarbstoffen beim Färbevorgang

Bei der Ausführung der sogenannten Nachgerbung, die ebenfalls mit erfindungsgemäß erhaltenen Präparationen ausgeführt werden kann, werden zu der 40°C warmen Flotte eine 60°C warme Lösung von ca. 3 % Farbstoff und 2 % einer erfindungsgemäß erhaltenen Präparation (Beispiel 3), hinzufügt. Man läßt ca. 60 min einwirken. Nach Verdünnung, Ansäuerung, Ablassen der Flotte und Waschen des Leders schließen sich die üblichen Nachbehandlungsmaßnahmen an.

### Verfahren zum Stabilisieren von anionischen optischen Aufhellerformulierungen

Eine zuvor entsalzte Lösung des Aufhellers, deren Aufhellergehalt etwa 27 % beträgt und die zusätzlich noch ca. 20 % Lösevermittler enthält, wird mit etwa 0,2 % einer erfindungsgemäß erhaltenen festen Präparation versetzt und durch Rühren homogenisiert.

### Verfahren zum Verflüssigen von Beton

Eine Betonsuspension wird zur Verflüssigung mit 0,1 bis 1,0 % der erfindungsgemäß erhaltenen Präparation, vorzugsweise ein Naphthalinsulfonsäure-Formaldehydkondensat enthaltend, versetzt.
[Test: 10 g Zinkoxid werden mit 1 bis 5 ml einer 1%igen Lösung des Kondensates versetzt. Die Mischung wird dünnflüssig. Ohne Zusatz des Kondensates entsteht eine hochviskose Paste.]

## Patentansprüche

1. Verfahren zur Herstellung salzarmer Präparationen von Kondensationsprodukten mit einem mittleren Kondensationsgrad von 1 bis 150, vorzugsweise 1 bis 20, insbesondere 1 bis 5 auf Basis von
A) sulfonierten Aromaten,
B) Aldehyden und/oder Ketonen und gegebenenfalls
C) einer oder mehreren Verbindungen, ausgewählt aus der Gruppe der nicht sulfonierten Aromaten, Harnstoff und Harnstoffderivaten,
dadurch gekennzeichnet, daß nach der Kondensation vorliegende anorganische Säure vom Kondensationsprodukt, gegebenenfalls in Form ihrer Salze nach Neutralisation, ganz oder teilweise abgetrennt wird bis der anorganische Salzgehalt kleiner 10 Gew.-%, bezogen auf die Präparation, ist.

2. Verfahren gemäß Anspruch 1, dadurch gekennzeichnet, daß man zur Abtrennung der anorganischen Säure, gegebenenfalls in Form ihres Salzes, ein Membrantrennverfahren einsetzt.

3. Verfahren gemäß Anspruch 2, dadurch gekennzeichnet, daß als Membrantrennverfahren die Ultrafiltration, Diffusionsdialyse oder Elektrodialyse eingesetzt wird.

4. Verfahren gemäß Anspruch 3, dadurch gekennzeichnet, daß bei dem Membrantrennverfahren eine Ultrafiltrationsmembran eingesetzt wird, die ein molecular-weight-cut-off(MWCO)-level von 1.000 bis 10.000 Dalton besitzt.

5. Verfahren gemäß Anspruch 1, dadurch gekennzeichnet, daß die Kondensationsprodukte aus
A) sulfonierten Aromaten,
B) Formaldehyd und gegebenenfalls
C) nicht sulfonierten Aromaten
hergestellt worden sind.

6. Verwendung der nach dem Verfahren gemäß einem der Ansprüche 1 bis 5 erhaltenen Präparationen sowie der Präparationen enthaltend ein Kondensationsprodukt auf Basis von
A) sulfonierten Aromaten,
B) Aldehyden und/oder Ketonen und gegebenenfalls
C) einer oder mehrere Verbindungen, ausgewählt aus der Gruppe der nicht sulfonierten Aromaten, Harnstoff und Harnstoffderivaten,
insbesondere Kondensationsprodukte aus
A) sulfonierten Aromaten,
B) Formaldehyd und gegebenenfalls
C) nicht sulfonierten Aromaten
wobei das Kondensationsprodukt einen mittleren Kondensationsgrad von kleiner gleich 5 besitzt und der anorganische Salzgehalt der Präparation kleiner 10 Gew.-%, bezogen auf die Präparation, beträgt,
oder
enthaltend ein Kondensationsprodukt mit einem mittleren Kondensationsgrad von 1 bis 20, vorzugsweise 1 bis 10, insbesondere 1 bis 5 auf Basis von
A) sulfonierten Aromaten,
B) Aldehyden und/oder Ketonen und gegebenenfalls
C) einer oder mehreren Verbindungen, ausgewählt aus der Gruppe der nicht sulfonierten Aromaten, Harnstoff und Harnstoffderivaten,
insbesondere Kondensationsprodukte aus
A) sulfonierten Aromaten,
B) Formaldehyd und gegebenenfalls
C) nicht sulfonierten Aromaten
wobei der Restmonomerengehalt kleiner 30 Gew.-%, bezogen auf das Kondensationsprodukt, insbesondere < 20 Gew.-% beträgt und der anorganische Salzgehalt kleiner 10 Gew.-%, vorzugsweise < 5 Gew.-%, insbesondere < 1 Gew.-%, bezogen auf die Präparation, beträgt,
oder
enthaltend ein Kondensationsprodukt, dadurch erhältlich, daß man eine wäßrige Lösung oder Suspension eines Kondensationsproduktes auf Basis von
A) sulfonierten Aromaten,
B) Aldehyden und/oder Ketonen und gegebenenfalls
C) einer oder mehreren Verbindungen, ausgewählt aus der Gruppe der nicht sulfonierten Aromaten, Harnstoff und Harnstoffderivaten,
insbesondere Kondensationsprodukte aus
A) sulfonierten Aromaten,
B) Formaldehyd und gegebenenfalls
C) nicht sulfonierten Aromaten
über eine Ultrafiltrationsmembran permeiert, die ein MWCO-level von >80.000 Dalton, insbesondere von 200.000 bis 500.000 Dalton, besitzt, als Gerbstoffe, Verflüssiger oder Dispergiermittel.

## Claims

1. Process for preparing low-salt preparations of condensation products having a mean degree of condensation of from 1 to 150, preferably from 1 to 20, in particular from 1 to 5, based on
A) sulphonated aromatics,
B) aldehydes and/or ketones and optionally
C) one or more compounds selected from the group consisting of nonsulphonated aromatics, urea and urea derivatives,
characterized in that inorganic acid present after the condensation is separated off in whole or in part from the condensation product, optionally in the form of its salts after neutralization, until the inorganic salt content is less than 10% by weight, relative to the preparation.

2. Process according to Claim 1, characterized in that the inorganic acid, optionally in the form of its salt, is separated off using a membrane separation technique.

3. Process according to Claim 2, characterized in that the membrane separation technique employed is ultrafiltration, diffusion dialysis or electrodialysis.

4. Process according to Claim 3, characterized in that, in the membrane separation technique, an ultrafiltration membrane which has a molecular weight cutoff (MWCO) level of from 1,000 to 10,000 daltons, is employed.

5. Process according to Claim 1, characterized in that the condensation products have been prepared from
A) sulphonated aromatics,
B) formaldehyde and optionally
C) nonsulphonated aromatics.

6. Use of the preparations obtained by the process according to one of Claims 1 to 5, and of the preparations comprising a condensation product based on
A) sulphonated aromatics,
B) aldehydes and/or ketones and optionally
C) one or more compounds selected from the group consisting of nonsulphonated aromatics, urea and urea derivatives,
particularly condensation products of
A) sulphonated aromatics,
B) formaldehyde and optionally
C) nonsulphonated aromatics
the condensation product having a mean degree of condensation of less than or equal to 5 and the inorganic salt content of the preparation being less than 10% by weight, relative to the preparation,
or
comprising a condensation product having a mean degree of condensation of from 1 to 20, preferably from 1 to 10, in particular from 1 to 5, based on
A) sulphonated aromatics,
B) aldehydes and/or ketones and optionally
C) one or more compounds selected from the group consisting of nonsulphonated aromatics, urea and urea derivatives,
particularly condensation products of
A) sulphonated aromatics,
B) formaldehyde and optionally
C) nonsulphonated aromatics
the residual monomer content being less than 30% by weight, based on the condensation product, in particular < 20% by weight and the inorganic salt content being less than 10% by weight, preferably < 5% by weight, in particular < 1% by weight, relative to the preparation,
or
comprising a condensation product, obtainable by permeating an aqueous solution or suspension of a condensation product based on
A) sulphonated aromatics,
B) aldehydes and/or ketones and optionally
C) one or more compounds selected from the group consisting of nonsulphonated aromatics, urea and urea derivatives
particularly condensation products of
A) sulphonated aromatics,
B) formaldehyde and optionally
C) nonsulphonated aromatics
through an ultrafiltration membrane which has a MWCO level of > 80,000 daltons, in particular from 200,000 to 500,000 daltons, as tanning agents, liquefiers or dispersants.

## Revendications

1. Procédé pour la préparation de préparations de produits de condensation pauvres en sels présentant un degré moyen de condensation de 1 à 150, de préférence de 1 à 20, en particulier de 1 à 5 à base
A) de composés aromatiques sulfonés,
B) d'aldéhydes et/ou de cétones et éventuellement
C) d'un ou de plusieurs composés choisis parmi les composés aromatiques non sulfonés, l'urée et les dérivés de l'urée,
caractérisé en ce que l'on sépare après la condensation totalement ou partiellement les acides inorganiques présents du produit de condensation, éventuellement dans la forme de leurs sels après neutralisation, jusqu'à ce que la teneur en sels inorganiques est inférieure à 10% en poids, rapportés à la préparation.

2. Procédé selon la revendication 1, caractérisé en ce que l'on utilise un procédé de séparation par membrane pour la séparation des acides inorganiques éventuellement dans la forme de leur sel.

3. Procédé selon la revendication 2, caractérisé en ce que l'on utilise pour le procédé de séparation par membrane l'ultrafiltration, la dialyse de diffusion ou l'électrodialyse.

4. Procédé selon la revendication 3, caractérisé en ce que l'on utilise dans le procédé de séparation par membrane une membrane d'ultrafiltration qui possède un Molecular-Weight-Cut-Off (MWCO)-level (seuil de coupure) de 1 000 à 10 000 Dalton.

5. Procédé selon la revendication 5, caractérisé en ce que les produits de condensation ont été préparés à partir
A) de composés aromatiques sulfonés,
B) de formaldéhyde et éventuellement
C) de composés aromatiques non sulfonés.

6. Utilisation des préparations obtenues selon le procédé selon l'une des revendications 1 à 5 ainsi que des préparations contenant un produit de condensation à base
A) de composés aromatiques sulfonés,
B) d'aldéhydes et/ou de cétones et éventuellement
C) d'un ou de plusieurs composés choisis parmi les composés aromatiques non sulfonés, l'urée et les dérivés de l'urée,
en particulier des produits de condensation
A) de composés aromatiques sulfonés,
B) de formaldéhyde et éventuellement
C) de composés aromatiques non sulfonés,
le produit de condensation présentant un degré moyen de condensation inférieur ou égal à 5 et la teneur en sel inorganique de la préparation étant inférieure à 10% en poids, rapportés à la préparation ou
contenant un produit de condensation présentant un degré moyen de condensation de 1 à 20, de préférence de 1 à 10, en particulier de 1 à 5, à base
A) de composés aromatiques sulfonés,
B) d'aldéhydes et/ou de cétones et éventuellement
C) d'un ou de plusieurs composés choisis parmi les composés aromatiques non sulfonés, l'urée et les dérivés de l'urée,
en particulier des produits de condensation
A) de composés aromatiques sulfonés,
B) de formaldéhyde et éventuellement
C) de composés aromatiques non sulfonés,
la teneur en monomères résiduels étant inférieure à 30% en poids, rapportés au produit de condensation, en particulier <20% en poids et la teneur en sel inorganique étant inférieure à 10% en poids, de préférence <5% en poids; en particulier <1% en poids, rapportés à la préparation,
ou
contenant un produit de condensation, obtenues en ce que l'on fait perméer à travers une membrane d'ultrafiltration qui présente un niveau MWCO >80 000 Dalton, en particulier de 200 000 à 500 000 Dalton, une solution aqueuse ou une suspension d'un produit de condensation à base
A) de composés aromatiques sulfonés,
B) d'aldéhydes et/ou de cétones et éventuellement
C) d'un ou de plusieurs composés choisis parmi les composés aromatiques non sulfonés, l'urée et les dérivés de l'urée,
en particulier de produits de condensation
A) de composés aromatiques sulfonés,
B) de formaldéhyde et éventuellement
C) de composés aromatiques non sulfonés.
comme matières de tannage, liquéfacteurs ou émulsionnants.
